# EUROPEAN PATENT APPLICATION

(11) **EP 3 282 415 A1**
(43) Date of publication of application: **14.02.2018**
(21) Application number: 16773375.7
(22) Date of filing: 25.03.2016
(51) Int. Cl.: G06Q 40/00

(54) **SYSTEM FOR PROVIDING CHANGING INTEREST RATE FINANCIAL PRODUCT THAT IS CONNECTED TO EXPENDITURE**

(30) Priority: 27.03.2015 KR 20150043548
(71) Applicant: Nam, Ki-won, Seoul 06159 (KR)
(72) Inventor: Nam, Ki-won, Seoul 06159 (KR)
(74) Representative: Botti, Mario
(86) International application number: PCT/KR2016/003085
(87) International publication number: WO 2016/159594

(57) **Abstract**

The present invention provides a system for providing a financial product with a variable expenditure-linked interest rate in which a user selects purchase elements such as an object product, a service, or a store for inevitable expenditure in future in advance, and performs an installment savings type payment or a prepayment in which a detailed setting value for payment is freely set, and a producer conditionally pays a predetermined amount of money of the payment to a seller, such that an interest of regular or installment savings, a prepurchase support interest for purchase of a product or a service, and a prepayment interest are added up, thereby increasing economic profits of each subject, and enabling rapid processing of financial products. Thereby, the user receives different expenditure-linked interests according to prepurchase and prepayment including the cash interest.

## Description

### [BACKGROUND OF THE INVENTION]

### 1. Field of the Invention

The present invention relates to a system for providing a financial product with a variable expenditure-linked interest rate, and more particularly, to a system for providing a financial product with a variable expenditure-linked interest rate in which a user selects purchase elements such as an object product, a service, a store, or the like for inevitable expenditure in future in advance, and performs an installment savings type payment or a prepayment in which a detailed setting value for payment is freely set, and a producer conditionally pays a predetermined amount of money of the payment to a seller.

### 2. Description of the Related Art

As well known in the art, in accordance with recent development of information communication technology, a technology for information service that provides information on various fields by wide area data communication network in real time to multiple subscribers through at least one host server has been actively developed.

Based on the technology, recently, a peripheral technology such as a cache memory expansion technology for more rapidly providing accurate information to a subscriber, and an information sorting and compression technology for more conveniently accessing taste and preference of the subscriber have been developed. Accordingly, development of various contents and solutions therethrough is also accelerated.

In a field of financial products, based on a consumption trend changed according to economic environment or global economic condition, basic financial products such as a regular savings product or an installment savings product also have been changed. In these days of economic condition of ultra-low interest rates, even when an interest rate is changed by only 0.1 to 0.2%, a large amount of liquidity moves by following the changed interest rate.

On the other hand, under such an economic condition, consumption and investment cannot not but be decreased. Therefore, sellers frequently hold discount events while minimizing a profit margin to induce consumption of consumers, and in the case of sellers or producers, under the shrinking economy, they should pay high interest on a loan in a case of a credit loan, not a secured loan.

That is, even in a case of an interest rate of regular savings of less than 1%, if a regular savings product with a larger interest rate than that of others is released, consumers are concentrated for the product. However, the consumers do not care that much about a five percent discount of daily necessities that will be consumed in any case.

Further, even when regular savings are used as finances of a loan product with a high interest rate of a user, a real interest rate thereof is still in a range of about 1%. In addition, credit loans with a high interest rate for a short-term money to be paid by the producer or seller as costs for components or the like are rampant, which result in a deterioration in a production environment. As a result, consumers are indirectly damaged.

It can be considered that all these problems are caused since regular savings, expenditure, installment savings, lending, production, and sales are not integrated but are operated in an independent cycle, and organic and linkable connection between the products is not made.

### [SUMMARY OF THE INVENTION]

In consideration of the above-mentioned circumstances, it is an object of the present invention to provide a system for providing a financial product with a variable expenditure-linked interest rate in which a user selects purchase elements such as an object product, a service, or a store for inevitable expenditure in future in advance, and performs an installment savings type payment or a prepayment in which a detailed setting value for payment is freely set, and a producer conditionally pays a predetermined amount of money of the payment to a seller, such that an interest of regular or installment savings, a prepurchase support interest for purchase of a product or a service, and a prepayment interest are added up, thereby increasing economic profits of each subject, and enabling rapid processing of financial products.

In order to accomplish the above object, according to an aspect of the present invention, there is provided a system for providing a financial product with a variable expenditure-linked interest rate, including: a user terminal configured to provide information of an expenditure-linked interest rate offered by a plurality of payment recipients so that a user reads, input enrollment condition information for a regular savings product with a variable expenditure-linked interest rate or an installment savings product with a variable expenditure-linked interest rate in which payment is made to a specific payment recipient specified by the user, and generate an enrollment signal; a seller server configured to register information of an expenditure-linked interest rate of each seller for the regular savings product with a variable expenditure-linked interest rate or the installment savings product with a variable expenditure-linked interest rate to an integrated financial product-providing server so as to transmit the information of the expenditure-linked interest rate to the user terminal, and receive in advance a payment of the user from the integrated financial product-providing server by the regular savings product with a variable expenditure-linked interest rate or the installment savings product with a variable expenditure-linked interest rate; and the integrated financial product-providing server configured to receive the information of the expenditure-linked interest rate of each seller for the regular savings product with a variable expenditure-linked interest rate or the installment savings product with a variable expenditure-linked interest rate to register the information of the expenditure-linked interest rate so that the user reads, receive the enrollment signal and the enrollment condition information of the user to register the enrollment signal and the enrollment condition information, pay the payment to the seller server according to the prepayment signal of the user, and provide an expenditure-linked interest to the user.

Preferably, the payment recipient includes a selling company or a production company, or a selling company or production company related to a product category, and a selling company or production company related to manufacture or sales of a specific product.

Preferably, the expenditure-linked interest includes a cash interest generated for regular cash savings or installment cash savings; a prepurchase support interest which is money provided at the time of making prepurchase for a specific product; and
a prepayment interest for money prepaid to a producer or seller of the specific product at the time of making prepayment for the product.

Preferably, the system further includes: a financial server configured to receive money of regular savings or installment savings processed by the integrated financial product-providing server, perform a loan operation to the payment recipient, and linked with the integrated financial product-providing server.

Preferably, the enrollment condition information for the regular savings product with a variable expenditure-linked interest rate or the installment savings product with a variable expenditure-linked interest rate is a condition set by the user, and includes information on selection of the regular savings product or the installment savings product, deposit amount information in a case of the regular savings, and maturities setting and payment amount setting information in a case of the installment savings.

Preferably, in the user terminal, a financial product-linked application accessing the integrated financial product-providing server, displaying an UI, selecting a product, inputting a setting value, reading interest information and a use condition, checking a balance, and performing an account transfer is installed.

Preferably, in the case of the regular savings product with a variable expenditure-linked interest rate or the installment savings product with a variable expenditure-linked interest rate in which withdrawal on demand is possible, the integrated financial product-providing server provides a certain rate of expenditure-linked interest based on a balance, and sets a minimum withdrawal-limited amount of the user, such that different interests are provided.

Preferably, the integrated financial product-providing server includes an interest calculator calculating the expenditure-linked interest according to setting information set by the user at the time of deposit into regular savings or installment savings of the user.

Preferably, the integrated financial product-providing server includes a prepayment processor processing prepayment according to a pre-registered condition at the time of deposit into regular savings or installment savings of the user.

Preferably, the integrated financial product-providing server includes a membership information manager registering and managing information of a user who enrolls in the financial product with a variable expenditure-linked interest rate and a producer or seller for receiving support money of the financial product with a variable expenditure-linked interest rate; a financial product selection unit providing the financial product with a variable expenditure-linked interest rate so that the user selects; an option input unit setting options such as a maturity date, a payment amount, a deferred amount, and a minimum withdrawal-limited amount of the financial product selected by the user; a user-specific limited amount setting unit setting a minimum withdrawal-limited amount for each user; a data storage unit storing information of the user, the seller, and the producer, and storing information on the financial product with a variable expenditure-linked interest rate, enrollment information, information on deposit of a prepaid amount, and information on payment of the prepaid amount; and a controller performing a control to pay to the user an interest of regular savings or installment savings, a prepurchase support interest, and a prepayment interest for prepayment for future purchase from a specific seller, future purchase of a specific product, or future purchase in a specific product category and prepay a prepaid money to a corresponding seller or producer.

Preferably, if the payment recipient specified by the user is a specific selling company or a specific production company, the integrated financial product-providing server provides the user with an average expenditure-linked interest rate of all products sold or produced by the selling company or the production company.

Preferably, if the payment recipient specified by the user is a specific category, the integrated financial product-providing server provides the user with an average expenditure-linked interest rate of products belonging to the category.

Preferably, if the payment recipient specified by the user is a specific product or service, the integrated financial product-providing server provides the user with an expenditure-linked interest rate specified for the product or service.

Preferably, different expenditure-linked interests are provided in a case in which the user specifies a specific selling company or a specific production company as the payment recipient, a case in which the user specifies a category in a state in which a selling company or a production company is specified, and a case in which a specific product belonging to a category is specified, respectively.

Preferably, the prepayment interest is less than at least an interest on a credit loan of a commercial bank.

Preferably, respective producers or sellers offer different prepurchase support interests and prepayment interests.

Preferably, the integrated financial product-providing server manages so that the larger the minimum withdrawal-limited amount, the more the additional interest is provided.

Preferably, if the user specifies a plurality of payment recipients, the integrated financial product-providing server manages so that the user divisionally sets a prepayment amount for each payment recipient, and
prepays an amount deposited by the user to each payment recipient at a set ratio.

Preferably, if the user specifies a plurality of payment recipients, the integrated financial product-providing server manages so that the user divisionally sets a fixed balance amount for each payment recipient,
prepays an amount deposited by the user to each payment recipient at a set ratio, and manages so that withdrawal is not made if the withdrawal makes a balance less than the fixed balance amount.

According to another aspect of the present invention, there is provided a system for providing a financial product with a variable expenditure-linked interest rate, including: a user terminal configured to provide information of an expenditure-linked interest rate offered by a plurality of payment recipients so that the user reads, and perform prepayment of a certain amount to a specific payment recipient specified by the user in cash or by a credit card; a seller server configured to register information of an expenditure-linked interest rate of each seller for a product or service with a variable expenditure-linked interest rate to an integrated financial product-providing server so as to transmit the information of the expenditure-linked interest rate to the user terminal, and receive in advance a payment of the user from the integrated financial product-providing server ; and the integrated financial product-providing server configured to receive the information of the expenditure-linked interest rate of each seller for the product or service with a variable expenditure-linked interest rate to register the information of the expenditure-linked interest rate so that the user reads, receive a product or service selection signal and a payment signal of the user to register the product or service selection signal and the payment signal, pay the payment to the seller server according to the prepayment signal of the user, and provide an expenditure-linked interest to the user.

Preferably, the expenditure-linked interest includes an interest in which a credit card payment fee and an interest for regular cash savings are added up at the time of cash payment; a prepurchase support interest which is money provided at the time of making prepurchase for a specific product; and a prepayment interest for money prepaid to a producer or seller of the specific product at the time of making prepayment for the product.

Preferably, the system further includes: a financial server configured to receive money prepaid in cash processed by the integrated financial product-providing server and perform a loan operation to the payment recipient, or a credit card company server configured to process money prepaid by the credit card and performing a loan operation to the payment recipient, the financial server or the credit card company server being linked with the integrated financial product-providing server.

Preferably, in the user terminal, a financial product-linked application accessing the integrated financial product-providing server, displaying an UI, inputting product selection information, reading interest information, performing an account transfer, outputting information of a balance after actual product purchase is installed.

Preferably, the integrated financial product-providing server calculates and provides a certain rate of expenditure-linked interest for a changed balance after actual purchase of a product is made.

Preferably, the integrated financial product-providing server includes an interest rate manager calculating a cumulative cash interest per day when a certain period elapses after prepayment by the user in cash for future expenditure, providing a prepurchase support interest for money spent when actual expenditure occurs, and performing interest management to provide a prepayment interest for a balance after adjustment.

Preferably, if the user specifies a plurality of payment recipients, the integrated financial product-providing server divides a payment amount of the user at a ratio of sales and prepays the divided amount.

Preferably, if the user specifies a plurality of payment recipients, the integrated financial product-providing server divides a payment amount of the user at a ratio of sales and prepays the divided amount, and manages so that a total amount of payment for each company does not exceed an amount requested by each company.

Preferably, if the user specifies a plurality of payment recipients, the integrated financial product-providing server divides a payment amount of the user by reflecting a credit rating of each payment recipient so that the higher the credit rating, the larger the prepaid amount is, and prepays the divided amount.

Preferably, the integrated financial product-providing server includes a membership information manager registering and managing information of a user who enrolls in the financial product with a variable expenditure-linked interest rate and a producer or seller for receiving support money of the financial product with a variable expenditure-linked interest rate; a financial product selection unit providing the financial product with a variable expenditure-linked interest rate so that the user selects; a future expenditure company setting unit registering information of a future expenditure company set by the user; and a payment information manager managing information of prepayment by the user to the future expenditure company.

Preferably, the integrated financial product-providing server further includes a company-receiving amount calculator dividing prepaid money of the user for companies specified by the user at a certain ratio to calculate an amount paid to each company.

Preferably, the integrated financial product-providing server includes a prepayment processor processing prepayment according to a pre-registered condition at the time of prepayment by the user.

Preferably, the integrated financial product-providing server performs fee processing by being linked with a card company server so that a card fee of the company for money spent when actual expenditure occurs is incurred at the time of prepayment by the user for future expenditure by a credit card.

Preferably, the prepurchase support interest is an interest provided to the user to be usable at the time of actual purchase of a product or service.

Preferably, the prepayment interest is an interest provided to the user according to a period of use of a payment from a point in time at which payment to the company is made to a point in time at which actual purchase of a product or service is made.

Preferably, the longer the period from the point in time at which payment to the company is made to the point in time at which actual purchase of a product or service is made, the larger the prepayment interest provided to the user is.

In the system for providing a financial product with a variable expenditure-linked interest rate according to the present invention, a user selects a product, a category, or a store for necessary expenditure in future in advance and performs prepayment. Thereby, the user receives different expenditure-linked interests according to prepurchase and prepayment including the cash interest. Therefore, in spite of the era of ultra-low interest rate, economic profits are very large, and sellers may predict future sales, and may thus methodically plan various processes of an extension of equipment, an increase in working force, securing of spaces, and the like, and may receive in advance the prepaid money of the user in various ways, thus to stably circulate money for necessary short-term money. The server automatically monitors the expenditure to recalculate the expenditure-linked interest rate for an amount of balance of the user, thereby increasing convenience of the user and the seller.

### [BRIEF DESCRIPTION OF THE DRAWINGS]

The above and other objects, features and other advantages of the present invention will be more clearly understood from the following detailed description taken in conjunction with the accompanying drawings, in which:
FIG. 1 is a view illustrating a schematic configuration of a system for providing a financial product with a variable expenditure-linked interest rate according to a first embodiment of the present invention;
FIG. 2 is a view illustrating a state of a user setting through the system for providing a financial product with a variable expenditure-linked interest rate according to the first embodiment of the present invention;
FIG. 3 is a diagram for describing a principle of a change in a prepurchase support interest and a prepayment interest through the system for providing a financial product with a variable expenditure-linked interest rate according to the first embodiment of the present invention;
FIG. 4 is a view illustrating an interest structure provided in the system for providing a financial product with a variable expenditure-linked interest rate according to the first embodiment of the present invention;
FIG. 5 is a view illustrating a structure of use of an interest through the system for providing a financial product with a variable expenditure-linked interest rate according to the first embodiment of the present invention;
FIG. 6 is a block diagram illustrating a configuration of an integrated financial product-providing server included in the system for providing a financial product with a variable expenditure-linked interest rate according to the first embodiment of the present invention;
FIG. 7 is a view illustrating a principle of a user setting and payment of prepaid money through a system for providing a financial product with a variable expenditure-linked interest rate according to a second embodiment of the present invention;
FIG. 8 is a view illustrating a schematic configuration of a system for providing a financial product with a variable expenditure-linked interest rate according to a third embodiment of the present invention;
FIG. 9 is a view illustrating a principle of a user setting and payment of prepaid money through the system for providing a financial product with a variable expenditure-linked interest rate according to the third embodiment of the present invention; and
FIG. 10 is a block diagram illustrating a configuration of an integrated financial product-providing server included in the system for providing a financial product with a variable expenditure-linked interest rate according to the third embodiment of the present invention.

### [DETAILED DESCRIPTION OF THE INVENTION]

Hereinafter, a system for providing a financial product with a variable expenditure-linked interest rate according to a first embodiment of the present invention will be described in detail with reference to the accompanying drawings.

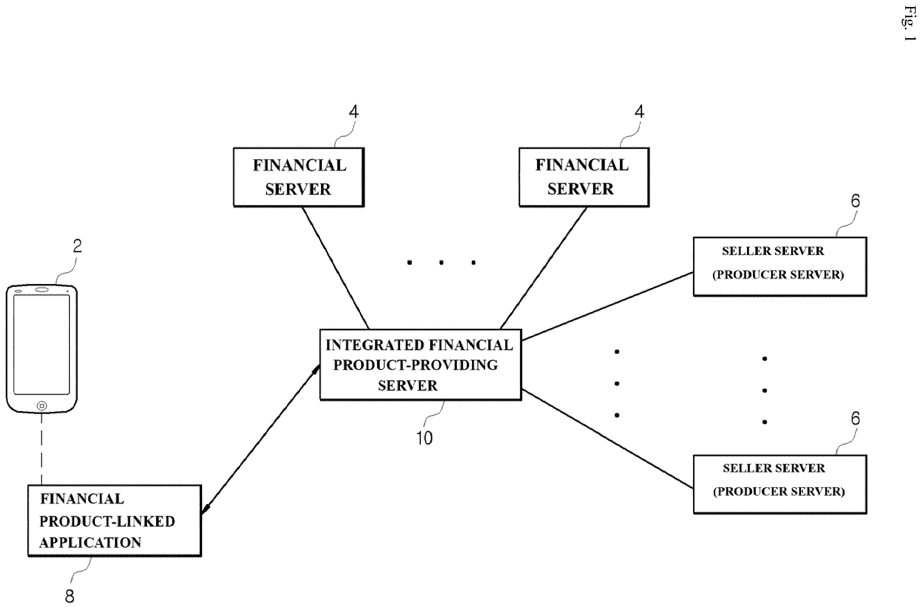

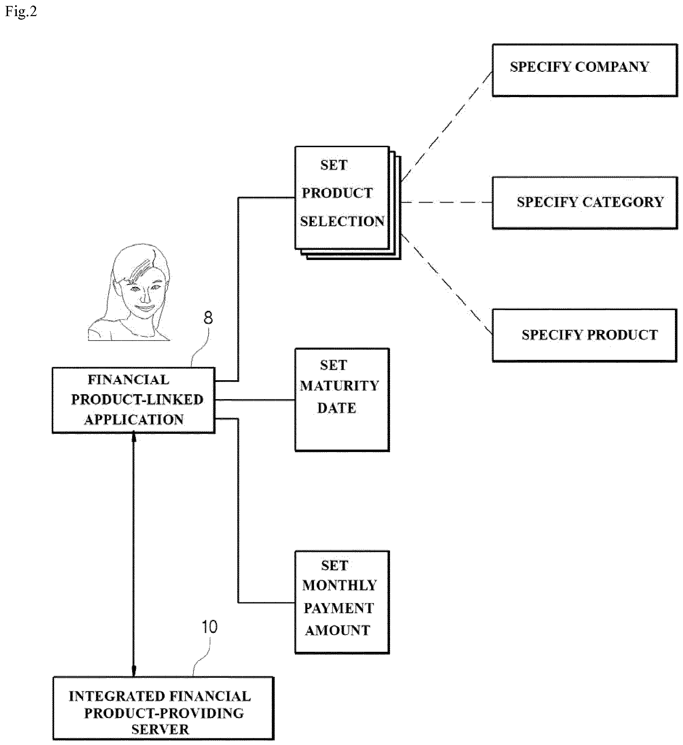

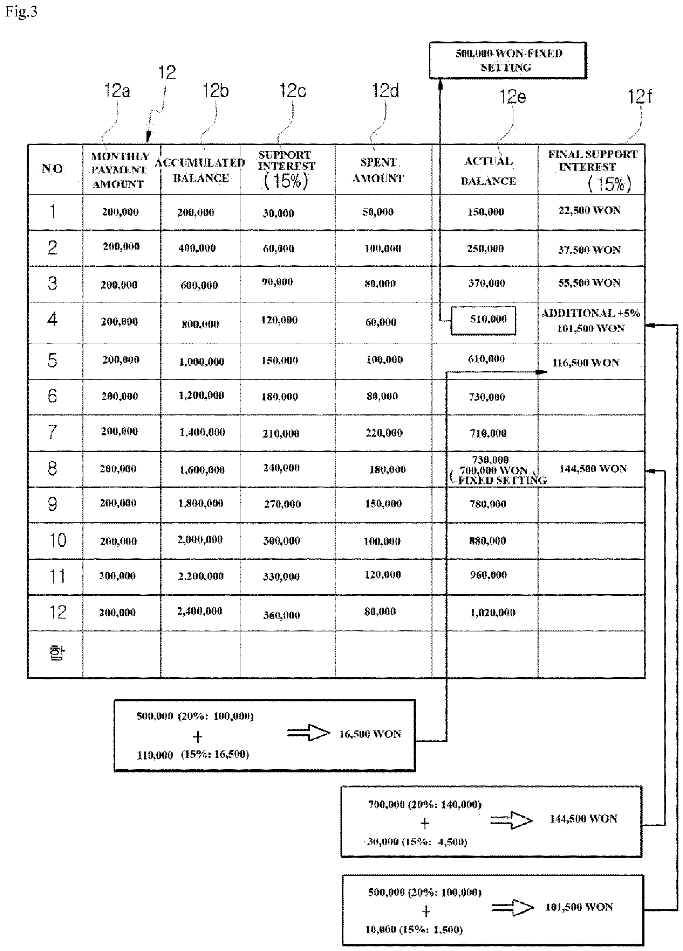

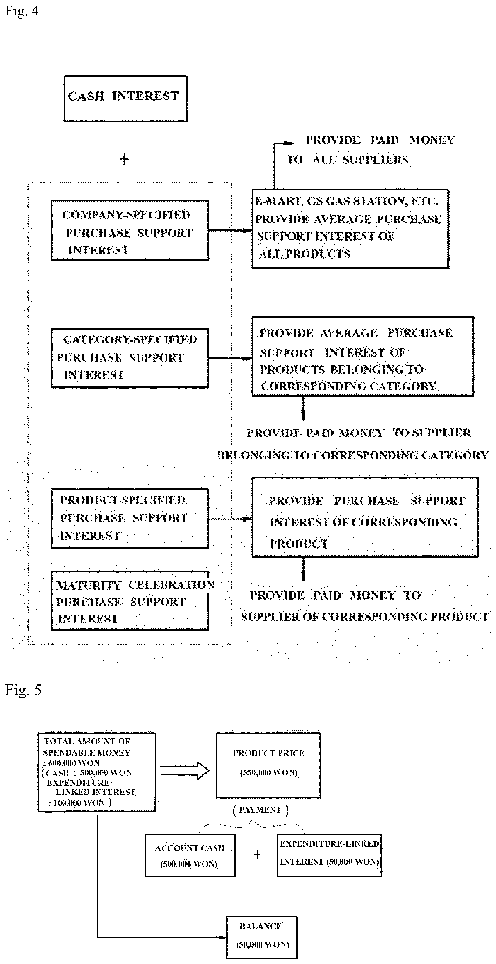

FIG. 1 is a view illustrating a schematic configuration of the system for providing a financial product with a variable expenditure-linked interest rate according to the first embodiment of the present invention, FIG. 2 is a view illustrating a state of a user setting through the system for providing a financial product with a variable expenditure-linked interest rate according to the first embodiment of the present invention, FIG. 3 is a diagram for describing a principle of a change in a prepurchase support interest and a prepayment interest through the system for providing a financial product with a variable expenditure-linked interest rate according to the first embodiment of the present invention, and FIG. 4 is a view illustrating an interest structure provided in the system for providing a financial product with a variable expenditure-linked interest rate according to the first embodiment of the present invention.

Referring to FIGS. 1 to 4, the system for providing a financial product with a variable expenditure-linked interest rate according to the first embodiment of the present invention is a system in which a user selects purchase elements such as an object product, a service, or a store for inevitable expenditure in future in advance, and performs an installment savings type payment or a prepayment in which a detailed setting value for payment is freely set, and a producer conditionally pays a predetermined amount of money of the payment to a seller, such that an interest of regular or installment savings, a prepurchase support interest for purchase of a product or a service, and a prepayment interest are added up, thereby increasing economic profits of each subject, and enabling rapid processing of financial products.

That is, the system for providing a financial product with a variable expenditure-linked interest rate according to the first embodiment of the present invention is a system in which determination of prepurchase of the product or service selected by a user is made, and money prepaid through regular savings or installment savings for the product or service selected by the user is directly paid to a supplier of the product or service, such that more benefits offered by the seller for a consumer that correspond thereto may be provided to the consumer.

According to the present invention, the user may obtain more benefits through organized determination of prepurchase for a definitely expected expenditure in future and prepayment, and the seller or producer may expect sales in future through the determination of prepurchase of the user, stably secure fixed sales, and secure necessary money such as costs for components at low interest rates. Therefore, the present invention may provide a new financial product in which regular or installment savings, lending, prepurchase, and prepayment are integrated.

More specifically, the system for providing a financial product with a variable expenditure-linked interest rate according to the first embodiment of the present invention includes a user terminal 2 configured to provide information of an expenditure-linked interest rate offered by a plurality of payment recipients so as to allow the user to read, input enrollment condition information for a regular savings product with a variable expenditure-linked interest rate or an installment savings product with a variable expenditure-linked interest rate in which payment is made to a specific payment recipient specified by the user, and generate an enrollment signal.

Further, the system for providing a financial product with a variable expenditure-linked interest rate according to the first embodiment of the present invention includes a seller server 6 configured to register the information of an expenditure-linked interest rate of each seller for the regular savings product with a variable expenditure-linked interest rate or the installment savings product with a variable expenditure-linked interest rate to an integrated financial product-providing server 10 so as to transmit the information of the expenditure-linked interest rate to the user terminal 2, and receive in advance a payment of the user from the integrated financial product-providing server 10 by the regular savings product with a variable expenditure-linked interest rate or the installment savings product with a variable expenditure-linked interest rate.

Meanwhile, the system for providing a financial product with a variable expenditure-linked interest rate according to the first embodiment of the present invention includes the integrated financial product-providing server 10 configured to receive the information of the expenditure-linked interest rate of each seller for the regular savings product with a variable expenditure-linked interest rate or the installment savings product with a variable expenditure-linked interest rate to register the information of the expenditure-linked interest rate so as to allow the user to read, receive the enrollment signal and the enrollment condition information of the user to register the enrollment signal and the enrollment condition information, pay the payment to the seller server 6 according to the prepayment signal of the user, and provide an expenditure-linked interest to the user.

Herein, the payment recipient receives the payment prepaid by the user to divert the received payment, and may include a selling company or a production company, or a selling company or production company related to a product category, and a selling company or production company related to manufacture or sales of a specific product.

For example, the payment recipient may be a large retailer such as E-Mart or Lotte Mart, a production company such as Samsung electronics, a product category that is additionally selected in a state in which a selling company or a production company is specified (e.g., white goods category belonging to a specific large retailer), or a specific product (e.g., TV sold in the specific large retailer).

Accordingly, if the user determines prepurchase of a specific product and prepays a payment, the payment prepaid by the user is paid to a company selling the product.

Further, if the user determines to purchase a product at a specific selling company, determines to purchase the product in a specific category belonging to the selling company, and prepays a payment through regular savings or installment savings, the payment prepaid by the user is dividedly paid to selling companies of a plurality of products belonging to the category.

Further, if the user determines to purchase a product at a specific selling company and prepays a payment through the regular savings or installment savings, the payment prepaid by the user is paid to a plurality of selling companies belonging to the category, thus the selling companies dividedly pay the payment to a plurality of suppliers.

As a result, the more specific the product to purchase determined by the user, the larger the amount of prepaid payment received by an individual company in advance. Therefore, according to the present invention, different expenditure-linked interests are provided in a case in which the user specifies a specific selling company or a specific production company as the payment recipient, a case in which the user specifies a category in a state in which a selling company or production company is specified, and a case in which a specific product belonging to a category is specified, respectively.

Meanwhile, the expenditure-linked interest provided to the user through the system for providing a financial product with a variable expenditure-linked interest rate according to the first embodiment of the present invention is divided into: a cash interest generated for regular cash savings or installment cash savings; a prepurchase support interest which is money provided at the time of making prepurchase for a specific product; and a prepayment interest for money prepaid to a producer or seller of the specific product at the time of making prepayment for the product.

The cash interest is an interest for regular savings or installment savings that is provided by general financial institutions for regular savings or installment savings.

The prepurchase support interest is an interest provided by a seller as the user determines to purchase a product of the seller in the near future. The seller may fund the interest based on two grounds including financial gains obtained by predicting sales of the product in future and establishing a company strategy for production, distribution, and marketing in advance, and return of a part of a profit margin of the product purchased by the user.

The prepayment interest is an interest for compensation provided as the user determines purchase of a specific product in future and prepays a payment in advance at this moment, and a seller or producer who sells or produces the specific product receives the payment in advance and diverts the received payment for production or sales. Sellers or producers who need money may provide the interest for a prepaid payment to consumers like a type of interest on a loan.

Therefore, the prepayment interest needs to be less than at least an interest on a credit loan of a commercial bank.

In the sale of a product through the system according to the present invention, sale of the product in future is contracted and payment is made now. Therefore, it may be better for the seller economically than a case in which the sale is made now. Accordingly, respective producers or sellers may offer different prepurchase interests and prepayment interests.

That is, in the system according to the present invention, each producer or seller may offer a very high prepurchase interest and a very high prepayment interest in order to sell a product in a state of largely reducing a profit margin, and in a case of a popular product, since some sales in future may be already secured, a seller who sells the product may not offer excessive amounts of prepurchase interest and prepayment interest.

Meanwhile, in the system for providing a financial product with a variable expenditure-linked interest rate according to the first embodiment of the present invention, a financial server 4 receiving money of regular savings or installment savings processed by the integrated financial product-providing server 10 and performing a loan operation to the payment recipient may be linked with the integrated financial product-providing server 10.

That is, the integrated financial product-providing server 10 may be provided in a financial institution, and in this case, the financial server 4 is not needed. However, actually, the integrated financial product-providing server 10 performs a function such as an account transfer or a payment operation in place of the financial server 4, thus based on some viewpoints, it may be considered that the financial server 4 is included in the integrated financial product-providing server 10.

Further, the integrated financial product-providing server 10 may also directly manage a financial service without involvement of the financial institution. In particular, recently, some intrinsic financial services are performed by a plurality of IT companies, thus the integrated financial product-providing server 10 may also perform a financial function.

Meanwhile, in the system for providing a financial product with a variable expenditure-linked interest rate according to the first embodiment of the present invention, as described above, the user determines prepurchase by performing a product selection setting such as a specification of a company, specification of a category, or specification of a product, but simultaneously, needs to make prepayment.

That is, the user needs to select a prepayment type, and thus needs to enroll in the regular savings product with a variable expenditure-linked interest rate or the installment savings product with a variable expenditure-linked interest rate.

At this time, the enrollment condition information for the regular savings product with a variable expenditure-linked interest rate or the installment savings product with a variable expenditure-linked interest rate is a condition set by the user, and includes information on selection of a regular savings product or an installment savings product, deposit amount information in the case of the regular savings, and maturities setting and payment amount setting information in the case of the installment savings.

That is, after selecting a product to purchase in future, or selecting a category while deferring selection of the product, or selecting a specific selling company (e.g., Lotte Mart) at which purchase will be made while not selecting a category, the user may perform a regular savings type prepayment or an installment savings type prepayment.

At this time, in the case of the installment savings type, the prepayment does not mean that full price of the product is prepaid, but means that the payment is made in installments in advance at a predetermined interval.

Therefore, in this case, the user needs to set a maturity date and a monthly payment amount.

As a result, selling companies or producers such as E-Mart, GS Mart, Lotte Mart, Samsung electronics, LG electronics, and the like may launch a dedicated card by using the present invention.

Further, the user terminal 2 includes a financial product-linked application 8 installed therein for accessing the integrated financial product-providing server 10, displaying an UI, selecting a product, inputting a setting value, reading interest information and a use condition, checking a balance, and performing an account transfer, thereby facilitating checking of information or setting.

Meanwhile, if a product that a user who enrolls in the regular savings product with a variable expenditure-linked interest rate or the installment savings product with a variable expenditure-linked interest rate intends to purchase in future is an expensive product such as a large home appliance or a vehicle, cash withdrawal may not be needed during payment, but unlike this, if the product that the user intends to purchase is a household item, and a store such as a large retailer is specified, even though a financial product that the user enrolls in is the regular savings product with a variable expenditure-linked interest rate or the installment savings product with a variable expenditure-linked interest rate, the user will want to deposit and withdraw cash on demand.

Accordingly, in the system for providing a financial product with a variable expenditure-linked interest rate according to the first embodiment of the present invention, the user who enrolls in the regular savings product with a variable expenditure-linked interest rate or the installment savings product with a variable expenditure-linked interest rate may deposit and withdraw money paid into the regular savings or installment savings on demand, and the integrated financial product-providing server 10 recalculates the expenditure-linked interest according to the deposit and withdrawal.

That is, in the case of the regular savings product with a variable expenditure-linked interest rate or the installment savings product with a variable expenditure-linked interest rate in which withdrawal on demand is possible, the integrated financial product-providing server 10 provides a certain rate of expenditure-linked interest based on a balance, and sets a minimum withdrawal-limited amount of the user, such that different interests are provided.

Referring to FIG. 3, the integrated financial product-providing server 10 is provided with an expenditure-linked interest table 12 in which calculation for a payment amount for the installment savings paid by the user and a final expenditure-linked interest are recorded. The expenditure-linked interest table 12 displays the number of times of payment for the installment savings, and includes a monthly payment amount display section 12a is configured, an accumulated balance display section 12b provided on a side thereof, and a support interest display section 12c displaying a support interest.

Herein, the support interest is an interest obtained by adding up the cash interest, the prepurchase support interest, and the prepayment interest described above.

Further, on the side of the support interest display section 12c, a spent amount display section 12d is provided. The spent amount display section 12d displays a spent amount of money withdrawn by the user on demand, which means that deposit and withdrawal into and from the regular savings or installment savings on demand are possible.

Further, on the side of the spent amount display section 12d, an actual balance display section 12e is provided to display an actual balance remaining after subtracting a spent amount from an accumulated balance of the user, and on the side thereof, a final support interest display section 12f is provided.

Herein, the integrated financial product-providing server 10 calculates an expenditure-linked interest based on a balance displayed in the actual balance display section 12e, thus the expenditure-linked interest is calculated at an interest rate (for example, 15%) offered by a company and displayed as an amount of money in each period.

Meanwhile, if the user sets a certain amount of money of a balance as a minimum withdrawal-limited amount, the integrated financial product-providing server 10 fixes the amount so that the withdrawal is not made, if the withdrawal makes the balance less than the amount. Thus, the fixed amount may be prepaid to the producer or seller producing or selling the product, which may become a ground for providing an additional interest rate to the user.

Therefore, the integrated financial product-providing server 10 provides a certain rate of expenditure-linked interest, and pays a different interest depending on the setting of the minimum withdrawal-limited amount of the user.

For example, when the user enrolls in an installment savings product with a contracted rate of the expenditure-linked interest of 15%, and sets a minimum withdrawal-limited amount to contract an additional interest rate of 5%, if the user continues additional payment and expenditure to have an actual balance of 610,000 won at fifth times in a state in which 500,000 won is fixed as the minimum withdrawal-limited amount, the expenditure-linked interest for 610,000 won is calculated by providing the expenditure-linked interest of 20% for 500,000 won, and applying the expenditure-linked interest rate of 15% to 110,000 won.

Meanwhile, even if the balance is increased to 730,000 won, if the minimum withdrawal-limited amount is not further increased, the integrated financial product-providing server 10 calculates the expenditure-linked interest while continuously reflecting 500,000 won as the minimum withdrawal-limited amount.

That is, if the actual balance is 730,000 won, the expenditure-linked interest for 730,000 won is calculated by providing the expenditure-linked interest of 20% for 500,000 won, and applying the expenditure-linked interest rate of 15% to 230,000 won.

In this case, if the user increases the minimum withdrawal-limited amount to 700,000 won, although 700,000 won can not be withdrawn, but the expenditure-linked interest of 20% may be provided for 700,000 won, and the expenditure-linked interest rate of 15% may be applied for 30,000 won, thus to calculate the expenditure-linked interest for 730,000 won. As a result, the user may receive a benefit of interest rate higher than the above case.

At this time, the integrated financial product-providing server 10 may manage so that the larger the minimum withdrawal-limited amount, the more the additional interest is provided.

FIG. 5 is a view illustrating a structure of use of an interest through the system for providing a financial product with a variable expenditure-linked interest rate according to the first embodiment of the present invention.

Referring to FIG. 5, the expenditure-linked interest received by the user through the system for providing a financial product with a variable expenditure-linked interest rate according to the first embodiment of the present invention is divided into the cash interest, the prepurchase interest, and the prepayment interest as described above. In the case of the regular savings product or installment savings product with a variable expenditure-linked interest rate, preferably, the integrated financial product-providing server 10 is set in such a manner that the expenditure-linked interest may be used after using all the cash, or the expenditure-linked interest corresponding to a certain percentage of the amount of the spent cash may be used.

That is, when the integrated financial product-providing server 10 is set in such a manner that an expenditure-linked interest corresponding to 10% of the amount of the spent cash may be used, if a total amount of spendable money is 600,000 won, an amount of cash is 500,000 won, and an amount of expenditure-linked interest is 100,000 won, as illustrated in FIG. 5, when a price of a specific product is 550,000 won, the expenditure-linked interest of 100,000 won and cash of 450,000 won may not be used, but cash of 500,000 won and the expenditure-linked interest of 50,000 won corresponding to 5% of the spent cash may be used.

Also, the integrated financial product-providing server 10 may be set so as to use the expenditure-linked interest after using all the cash. The setting may be changed depending on a contraction among the user, the company, and the integrated financial product-providing server 10, but it is preferable that cash and an expenditure-linked interest corresponding to a certain percentage of the cash are used together as described above.

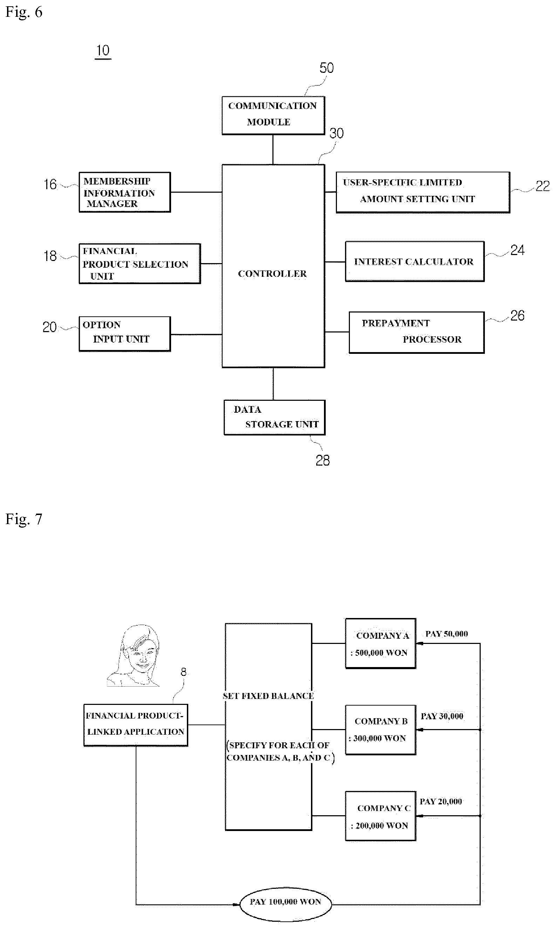

FIG. 6 is a block diagram illustrating a configuration of an integrated financial product-providing server included in the system for providing a financial product with a variable expenditure-linked interest rate according to the first embodiment of the present invention.

Referring to FIG. 6, the integrated financial product-providing server 10 included in the system for providing a financial product with a variable expenditure-linked interest rate according to the first embodiment of the present invention includes a communication module, a membership information manager, a financial product selection unit, an option input unit, a user-specific limited amount setting unit, an interest calculation unit, a prepayment processor, a data storage unit, and a controller, which will be described below.

A communication module 14 is configured to communicate with the user terminal 2, in particular, the financial product-linked application 8 installed in the user terminal 2, and communicate with the financial server 4 or the seller server (or a producer server) 6.

A membership information manager 16 is configured to register and manage information of a user who enrolls in a financial product with a variable expenditure-linked interest rate and a producer or seller for receiving support money of the financial product with a variable expenditure-linked interest rate. A financial product selection unit 18 is configured to provide the financial product with a variable expenditure-linked interest rate so as to allow the user to select.

Further, an option input unit 20 is configured to set options such as a maturity date, a payment amount, a deferred amount, and a minimum withdrawal-limited amount of the financial product selected by the user. A user-specific limited amount setting unit 22 is configured to set a minimum withdrawal-limited amount for each user.

An interest calculator 24 is configured to calculate the expenditure-linked interest according to setting information set by the user at the time of deposit into the regular savings or installment savings of the user. The interest calculator 24 calculates an interest while recording a payment amount and a balance by using the expenditure-linked interest table 12.

A prepayment processor 26 is configured to process the prepayment according to a pre-registered condition at the time of deposit into the regular savings or installment savings of the user. A data storage unit 28 is configured to store information of the user, the seller, and the producer, and store information on the financial product with a variable expenditure-linked interest rate, enrollment information, information on deposit of the prepaid amount, and information on payment of the prepaid amount.

A controller 30 is configured to perform a control to pay to the user an interest of the regular or installment savings, a prepurchase support interest, and a prepayment interest for prepayment for future purchase from a specific seller, future purchase of a specific product, or future purchase in a specific product category and prepay a prepaid money to the corresponding seller or producer.

Hereinafter, a system for providing a financial product with a variable expenditure-linked interest rate according to a second embodiment of the present invention will be described in detail with reference to the accompanying drawings.

FIG. 7 is a view illustrating a principle of a user setting and payment of prepaid money through the system for providing a financial product with a variable expenditure-linked interest rate according to the second embodiment of the present invention.

Referring to FIG. 7, in the system for providing a financial product with a variable expenditure-linked interest rate according to the second embodiment of the present invention, the user may enroll in a financial package product for a product to purchase in future or a store to perform a regular or installment savings type payment. In this case, the integrated financial product-providing server 10 needs to set a standard for payment.

That is, if there are a plurality of payment recipients, the integrated financial product-providing server 10 pays prepaid money that is paid or deposited by the user to the payment recipients based on the following several standards.

First, the user may set an amount or a proportion to be paid to each payment recipient.

Second, if the user does not specifically set the amount or proportion, the integrated financial product-providing server 10 may dividedly pay the amount paid by the user based on a ratio of sales of each payment recipient.

Even in this case, the payment is made within an amount requested by the payment recipient. For example, if a specific payment recipient has sufficient liquidity and thus does not need separate prepayment, the integrated financial product-providing server 10 excludes the payment recipient from the prepayment.

Third, the integrated financial product-providing server 10 reflects credit ratings provided to the payment recipients in advance by a financial institution in a payment ratio. As the credit rating is increased, payment is made at a higher payment ratio.

That is, in the system for providing a financial product with a variable expenditure-linked interest rate according to the second embodiment of the present invention, if the user specifies a plurality of payment recipients, the integrated financial product-providing server 10 manages so that the user divisionally sets a prepayment amount for each payment recipient, and prepays an amount deposited by the user to each payment recipient at the set ratio.

Further, if the user specifies a plurality of payment recipients, the integrated financial product-providing server 10 manages so that the user divisionally sets a fixed balance amount for each payment recipient. In addition, the integrated financial product-providing server 10 prepays an amount deposited by the user to each payment recipient at the set ratio, and manages so that withdrawal may not be made if the withdrawal makes the balance less than the fixed balance amount.

Further, if the user specifies a plurality of payment recipients, the integrated financial product-providing server 10 may divide the payment amount of the user at a ratio of sales.

Meanwhile, if the user specifies a plurality of payment recipients, the integrated financial product-providing server 10 divides the payment amount of the user at a ratio of sales and prepays the divided amount, and manages so that a total amount of payment for each company does not exceed an amount requested by each company.

Further, if the user specifies a plurality of payment recipients, the integrated financial product-providing server 10 may divide the payment amount of the user by reflecting the credit rating of each payment recipient so that the higher the credit rating, the larger the prepaid amount is divided, and prepays the divided amount.

Hereinafter, a system for providing a financial product with a variable expenditure-linked interest rate according to a third embodiment of the present invention will be described in detail with reference to the accompanying drawings.

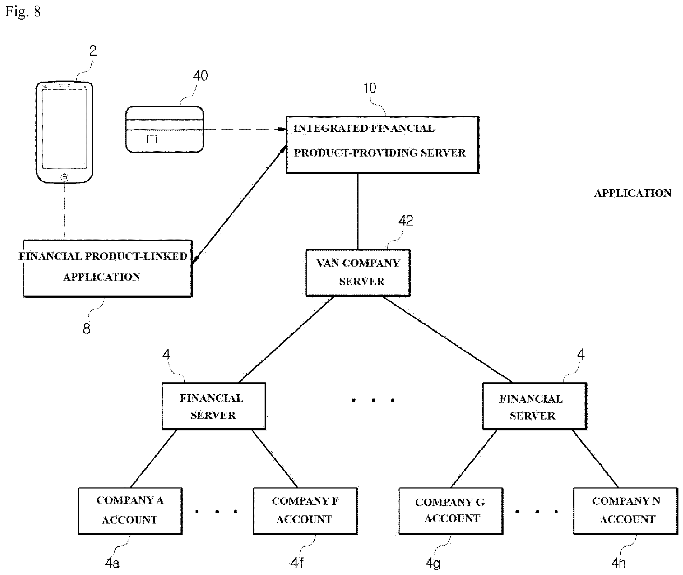

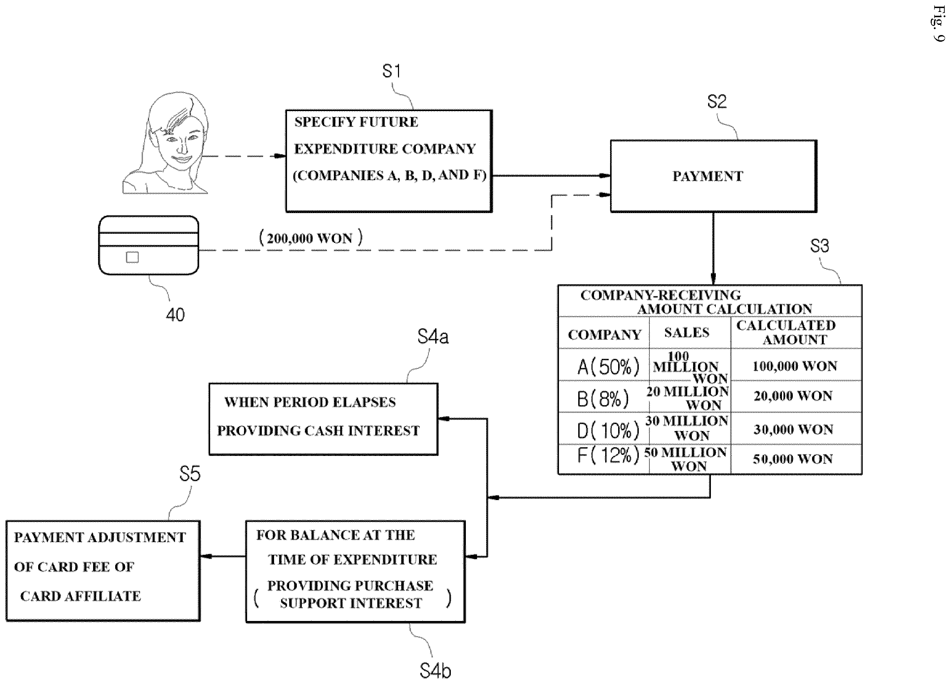

FIG. 8 is a view illustrating a schematic configuration of the system for providing a financial product with a variable expenditure-linked interest rate according to the third embodiment of the present invention, and FIG. 9 is a view illustrating a principle of a user setting and payment of prepaid money through the system for providing a financial product with a variable expenditure-linked interest rate according to the third embodiment of the present invention.

Referring to FIGS. 8 and 9, the system for providing a financial product with a variable expenditure-linked interest rate according to the third embodiment of the present invention includes a user terminal 2 configured to provide information of an expenditure-linked interest rate offered by a plurality of payment recipients so as to allow the user to read, and perform prepayment of a certain amount to a specific payment recipient specified by the user in cash or by a credit card; and a seller server 6 configured to register information of an expenditure-linked interest rate of each seller for a product or service with a variable expenditure-linked interest rate to the integrated financial product-providing server 10 so as to transmit the information of the expenditure-linked interest rate to the user terminal 2, and receive in advance a payment of the user from the integrated financial product-providing server 10.

Further, the system for providing a financial product with a variable expenditure-linked interest rate according to the third embodiment of the present invention includes the integrated financial product-providing server 10 configured to receive the information of the expenditure-linked interest rate of each seller for the product or service with a variable expenditure-linked interest rate to register the information of the expenditure-linked interest rate so as to allow the user to read, receive a product or service selection signal and a payment signal of the user to register the product or service selection signal and the payment signal, pay the payment to the seller server 6 according to the prepayment signal of the user, and provide an expenditure-linked interest to the user.

Similarly, the expenditure-linked interest includes an interest in which a credit card payment fee and an interest for regular cash savings are added up at the time of cash payment, a prepurchase support interest which is money provided at the time of making prepurchase for a specific product, and a prepayment interest for money prepaid to a producer or seller of the specific product at the time of making prepayment for the product.

At this time, in the system for providing a financial product with a variable expenditure-linked interest rate according to the third embodiment of the present invention, the payment recipient to be prepaid mainly includes life-related small individual companies such as, for example, a restaurant or a coffee shop, which are companies relating to expenditure that is essential if the user should take a meal or drink coffee when the user is out, like an office worker or a student, and this is essential expenditure.

Therefore, if it is expenditure that will be made in future inevitably, it is more economical for the user to maximize benefits. The user may receive maximized benefits through financial products in which regular savings, loans and expenditure are linked of the system for providing a financial product with a variable expenditure-linked interest rate according to the third embodiment of the present invention, and the seller may stably secure sales in future and be prepaid necessary money such as material costs, thus the system for providing a financial product with a variable expenditure-linked interest rate according to the third embodiment of the present invention is a system with very excellent economic feasibility.

Meanwhile, in the system for providing a financial product with a variable expenditure-linked interest rate according to the third embodiment of the present invention, a financial server 4 receiving money prepaid in cash processed by the integrated financial product-providing server 10 and performing a loan operation to the payment recipient or a credit card company server processing money prepaid by the credit card and performing a loan operation to the payment recipient may be further configured while being linked with the integrated financial product-providing server 10.

Further, the user terminal 2 includes a financial product-linked application 8 installed therein for accessing the integrated financial product-providing server 10, displaying an UI, inputting product selection information, reading interest information, performing an account transfer, and outputting information of a balance after actual product purchase.

In the case of the system for providing a financial product with a variable expenditure-linked interest rate according to the third embodiment of the present invention, interest processing relating to expenditure in living is made. That is, the user may use a deposit amount on a certain cycle in a state in which a certain amount of money is paid and deposited at one time through the integrated financial product-providing server 10, thus payment is made in advance, and actual purchase of a product or actual use of a service is made in future.

Therefore, the integrated financial product-providing server 10 calculates and provides a certain rate of expenditure-linked interest for a changed balance after actual purchase of a product is made.

In the integrated financial product-providing server 10, account information 4a to 4n of the payment recipient specified by the user is registered, and the integrated financial product-providing server 10 is linked with a VAN company server 42 so that the payment is possible at the time of payment by a credit card 40, and is linked with a financial server 4 so that payment is possible at the time of payment in cash.

The payment by the credit card through the VAN company server 42 or the payment in cash through transfer to the financial server 4 are a general financial flow, therefore will not be described in detail.

In the case of using the system for providing a financial product with a variable expenditure-linked interest rate according to the third embodiment of the present invention, first, the user specifies a company in which expenditure of the user will be made in future (hereinafter, referred to as a 'future expenditure company') to be mainly used through the integrated financial product-providing server 10. For example, companies A, B, D, and F may be specified, and expenditure-linked interest rates offered to the user by respective companies are different from each other. Therefore, the integrated financial product-providing server 10 registers information on the expenditure-linked interest rate offered by the respective companies so as to allow the user to read.

In a case in which the user specifies a future expenditure company, and prepays a certain amount of money, the integrated financial product-providing server 10 pays the prepaid money so that the specified company may divert.

At this time, a payment type is classified into several types as described above.

For example, if the user specifies a plurality of payment recipients, the integrated financial product-providing server 10 may divide the payment amount of the user at a ratio of sales and prepays the divided amount.

Further, if the user specifies a plurality of payment recipients, the integrated financial product-providing server 10 divides the payment amount of the user at a ratio of sales and prepays the divided amount, and manages so that a total amount of payment for each company does not exceed an amount requested by each company.

Further, if the user specifies a plurality of payment recipients, the integrated financial product-providing server 10 may divide the payment amount of the user by reflecting a credit rating of each payment recipient so that the higher the credit rating, the larger the prepaid amount is divided, and prepays the divided amount.

Meanwhile, the integrated financial product-providing server 10 may perform fee processing by being linked with the card company server so that a card fee of the company for money spent when actual expenditure occurs is incurred at the time of prepayment by the user for future expenditure by the credit card, may perform fee processing so that a card fee is incurred at the time of prepayment, may also perform fee processing so that a card fee is incurred at the time of divisional transfer of prepaid money for each specified company.

Meanwhile, the prepurchase support interest included in the expenditure-linked interest is an interest provided to the user to be usable at the time of actual purchase of the product or service. For example, the user may use the prepurchase support interest when a predetermined condition is satisfied.

For example, a condition that only cash and an interest corresponding to a certain percentage of the cash may be used, or a condition that the expenditure-linked interest may be used after using all the cash deposited in a product account may be provided.

Meanwhile, the prepayment interest is an interest provided to the user according to a period of use of the payment from a point in time at which payment to the company is made to a point in time at which actual purchase of the product or service is made. The longer the period from the point in time at which payment to the company is made to the point in time at which actual purchase of the product or service is made, the larger the prepayment interest provided to the user is.

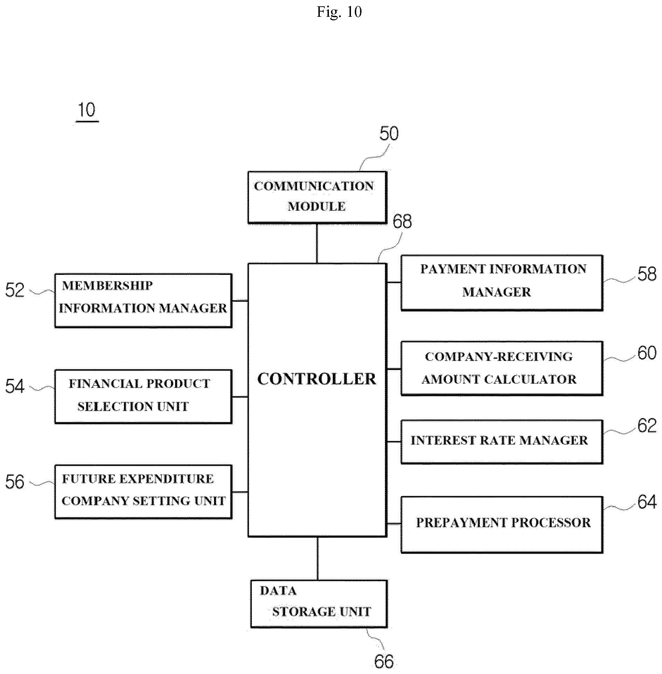

FIG. 10 is a block diagram illustrating a configuration of an integrated financial product-providing server included in the system for providing a financial product with a variable expenditure-linked interest rate according to the third embodiment of the present invention.

Referring to FIG. 10, the integrated financial product-providing server 10 included in the system for providing a financial product with a variable expenditure-linked interest rate according to the third embodiment of the present invention includes a communication module, a membership information manager, a financial product selection unit, a future expenditure company setting unit, a payment information manager, a company-receiving amount calculator, an interest rate manager, a prepayment processor, a data storage unit, and a controller, which will be described below.

A communication module 50 is configured to communicate with the user terminal 2, in particular, the financial product-linked application 8 installed in the user terminal 2, and communicate with the financial server 4, the seller server (or producer server) 6, or the VAN company server 42.

A membership information manager 52 is configured to register and manage information of a user who enrolls in a financial product with a variable expenditure-linked interest rate and a producer or seller for receiving support money of the financial product with a variable expenditure-linked interest rate. A financial product selection unit 54 is configured to provide each financial product with a variable expenditure-linked interest rate so as to allow the user to select.

A future expenditure company setting unit 56 is configured to register information of a future expenditure company set by the user. A payment information manager 58 is configured to manage information of prepayment by the user to the future expenditure company.

A company-receiving amount calculator 60 is configured to divide prepaid money of the user for companies specified by the user at a certain ratio to calculate an amount paid to each company.

An interest rate manager 62 is configured to calculate a cumulative cash interest per day when a certain period elapses after prepayment by the user in cash for future expenditure, provide a prepurchase support interest for money spent when actual expenditure occurs, and perform interest management to provide a prepayment interest for a balance after adjustment.

A prepayment processor 64 is configured to process prepayment according to a pre-registered condition at the time of prepayment by the user.

A data storage unit 66 is configured to store information of the user and information of the company, and store information on the financial product with a variable expenditure-linked interest rate, enrollment information, information on deposit of the prepaid amount, spent amount information, balance information, and information on payment of the prepaid amount to each company.

A controller 68 is configured to control each component to perform processing such as signal processing and amount processing for prepurchase and prepayment, payment processing for a company, interest calculation processing, and interest recalculation processing according to a change in a balance.

The system for providing a financial product with a variable expenditure-linked interest rate according to the third embodiment of the present invention generates an actual expenditure signal to the integrated financial product-providing server 10 and the seller server (or terminal) 6 through the financial product-linked application 8 later, such that the seller checks whether payment adjustment for provision of the product or service is made, and the integrated financial product-providing server 10 updates deposit change information of the user upon the actual expenditure and updates balance change information according to which the expenditure-linked interest rate is applied to recalculate the expenditure-linked interest rate.

Herein, it should be understood that the communication method in which an actual expenditure signal is generated to the integrated financial product-providing server 10 and the seller server (or terminal) 6 through the financial product-linked application 8 later is a general communication technique and a changed amount of deposit may be variously displayed like a scheme of coupon changed according to the actual expenditure signal between the consumer and the seller.

Meanwhile, the system for providing a financial product with a variable expenditure-linked interest rate according to the embodiments of the present invention is not limited to the above embodiments but may be variously changed without departing from the technical scopes thereof.

### [Description of Reference Numerals]

2: user terminal
4: financial server
6: seller server
8: financial product-linked application
10: integrated financial product-providing server
42: VAN company server

## Claims

1. A system for providing a financial product with a variable expenditure-linked interest rate, comprising: a user terminal 2 configured to provide information of an expenditure-linked interest rate offered by a plurality of payment recipients so that a user reads, input enrollment condition information for a regular savings product with a variable expenditure-linked interest rate or an installment savings product with a variable expenditure-linked interest rate in which payment is made to a specific payment recipient specified by the user, and generate an enrollment signal;
a seller server 6 configured to register information of an expenditure-linked interest rate of each seller for the regular savings product with a variable expenditure-linked interest rate or the installment savings product with a variable expenditure-linked interest rate to an integrated financial product-providing server 10 so as to transmit the information of the expenditure-linked interest rate to the user terminal 2, and receive in advance a payment of the user from the integrated financial product-providing server 10 by the regular savings product with a variable expenditure-linked interest rate or the installment savings product with a variable expenditure-linked interest rate; and
the integrated financial product-providing server 10 configured to receive the information of the expenditure-linked interest rate of each seller for the regular savings product with a variable expenditure-linked interest rate or the installment savings product with a variable expenditure-linked interest rate to register the information of the expenditure-linked interest rate so that the user reads, receive the enrollment signal and the enrollment condition information of the user to register the enrollment signal and the enrollment condition information, pay the payment to the seller server 6 according to the prepayment signal of the user, and provide an expenditure-linked interest to the user.

2. The system for providing a financial product with a variable expenditure-linked interest rate of claim 1, wherein the payment recipient includes a selling company or a production company, or a selling company or production company related to a product category, and a selling company or production company related to manufacture or sales of a specific product.

3. The system for providing a financial product with a variable expenditure-linked interest rate of claim 1, wherein the expenditure-linked interest includes a cash interest generated for regular cash savings or installment cash savings;
a prepurchase support interest which is money provided at the time of making prepurchase for a specific product; and
a prepayment interest for money prepaid to a producer or seller of the specific product at the time of making prepayment for the product.

4. The system for providing a financial product with a variable expenditure-linked interest rate of claim 1, further comprising: a financial server 4 configured to receive money of regular savings or installment savings processed by the integrated financial product-providing server 10, perform a loan operation to the payment recipient, and linked with the integrated financial product-providing server 10.

5. The system for providing a financial product with a variable expenditure-linked interest rate of claim 1, wherein the enrollment condition information for the regular savings product with a variable expenditure-linked interest rate or the installment savings product with a variable expenditure-linked interest rate is a condition set by the user, and includes information on selection of the regular savings product or the installment savings product, deposit amount information in a case of the regular savings, and maturities setting and payment amount setting information in a case of the installment savings.

6. The system for providing a financial product with a variable expenditure-linked interest rate of claim 1, wherein in the user terminal 2, a financial product-linked application 8 accessing the integrated financial product-providing server 10, displaying an UI, selecting a product, inputting a setting value, reading interest information and a use condition, checking a balance, and performing an account transfer is installed.

7. The system for providing a financial product with a variable expenditure-linked interest rate of claim 1, wherein in the case of the regular savings product with a variable expenditure-linked interest rate or the installment savings product with a variable expenditure-linked interest rate in which withdrawal on demand is possible, the integrated financial product-providing server 10 provides a certain rate of expenditure-linked interest based on a balance, and sets a minimum withdrawal-limited amount of the user, such that different interests are provided.

8. The system for providing a financial product with a variable expenditure-linked interest rate of claim 1, wherein the integrated financial product-providing server 10 includes an interest calculator 24 calculating the expenditure-linked interest according to setting information set by the user at the time of deposit into regular savings or installment savings of the user.

9. The system for providing a financial product with a variable expenditure-linked interest rate of claim 1, wherein the integrated financial product-providing server 10 includes a prepayment processor 26 processing prepayment according to a pre-registered condition at the time of deposit into regular savings or installment savings of the user.

10. The system for providing a financial product with a variable expenditure-linked interest rate of claim 1, wherein the integrated financial product-providing server 10 includes a membership information manager 16 registering and managing information of a user who enrolls in the financial product with a variable expenditure-linked interest rate and a producer or seller for receiving support money of the financial product with a variable expenditure-linked interest rate;
a financial product selection unit 18 providing the financial product with a variable expenditure-linked interest rate so that the user selects;
an option input unit 20 setting options such as a maturity date, a payment amount, a deferred amount, and a minimum withdrawal-limited amount of the financial product selected by the user;
a user-specific limited amount setting unit 22 setting a minimum withdrawal-limited amount for each user;
a data storage unit 28 storing information of the user, the seller, and the producer, and storing information on the financial product with a variable expenditure-linked interest rate, enrollment information, information on deposit of a prepaid amount, and information on payment of the prepaid amount; and
a controller 30 performing a control to pay to the user an interest of regular savings or installment savings, a prepurchase support interest, and a prepayment interest for prepayment for future purchase from a specific seller, future purchase of a specific product, or future purchase in a specific product category and prepay a prepaid money to a corresponding seller or producer.

11. The system for providing a financial product with a variable expenditure-linked interest rate of claim 2, wherein if the payment recipient specified by the user is a specific selling company or a specific production company, the integrated financial product-providing server 10 provides the user with an average expenditure-linked interest rate of all products sold or produced by the selling company or the production company.

12. The system for providing a financial product with a variable expenditure-linked interest rate of claim 2, wherein if the payment recipient specified by the user is a specific category, the integrated financial product-providing server 10 provides the user with an average expenditure-linked interest rate of products belonging to the category.

13. The system for providing a financial product with a variable expenditure-linked interest rate of claim 2, wherein if the payment recipient specified by the user is a specific product or service, the integrated financial product-providing server 10 provides the user with an expenditure-linked interest rate specified for the product or service.

14. The system for providing a financial product with a variable expenditure-linked interest rate of claim 2, wherein different expenditure-linked interests are provided in a case in which the user specifies a specific selling company or a specific production company as the payment recipient, a case in which the user specifies a category in a state in which a selling company or a production company is specified, and a case in which a specific product belonging to a category is specified, respectively.

15. The system for providing a financial product with a variable expenditure-linked interest rate of claim 3, wherein the prepayment interest is less than at least an interest on a credit loan of a commercial bank.

16. The system for providing a financial product with a variable expenditure-linked interest rate of claim 3, wherein respective producers or sellers offer different prepurchase support interests and prepayment interests.

17. The system for providing a financial product with a variable expenditure-linked interest rate of claim 7, wherein the integrated financial product-providing server 10 manages so that the larger the minimum withdrawal-limited amount, the more the additional interest is provided.

18. The system for providing a financial product with a variable expenditure-linked interest rate of claim 1, wherein if the user specifies a plurality of payment recipients, the integrated financial product-providing server 10 manages so that the user divisionally sets a prepayment amount for each payment recipient, and
prepays an amount deposited by the user to each payment recipient at a set ratio.

19. The system for providing a financial product with a variable expenditure-linked interest rate of claim 1, wherein if the user specifies a plurality of payment recipients, the integrated financial product-providing server 10 manages so that the user divisionally sets a fixed balance amount for each payment recipient,
prepays an amount deposited by the user to each payment recipient at a set ratio, and manages so that withdrawal is not made if the withdrawal makes a balance less than the fixed balance amount.

20. A system for providing a financial product with a variable expenditure-linked interest rate, comprising: a user terminal 2 configured to provide information of an expenditure-linked interest rate offered by a plurality of payment recipients so that the user reads, and perform prepayment of a certain amount to a specific payment recipient specified by the user in cash or by a credit card;
a seller server 6 configured to register information of an expenditure-linked interest rate of each seller for a product or service with a variable expenditure-linked interest rate to an integrated financial product-providing server 10 so as to transmit the information of the expenditure-linked interest rate to the user terminal 2, and receive in advance a payment of the user from the integrated financial product-providing server 10; and
the integrated financial product-providing server 10 configured to receive the information of the expenditure-linked interest rate of each seller for the product or service with a variable expenditure-linked interest rate to register the information of the expenditure-linked interest rate so that the user reads, receive a product or service selection signal and a payment signal of the user to register the product or service selection signal and the payment signal, pay the payment to the seller server 6 according to the prepayment signal of the user, and provide an expenditure-linked interest to the user.

21. The system for providing a financial product with a variable expenditure-linked interest rate of claim 20, wherein the expenditure-linked interest includes an interest in which a credit card payment fee and an interest for regular cash savings are added up at the time of cash payment;
a prepurchase support interest which is money provided at the time of making prepurchase for a specific product; and
a prepayment interest for money prepaid to a producer or seller of the specific product at the time of making prepayment for the product.

22. The system for providing a financial product with a variable expenditure-linked interest rate of claim 20, further comprising: a financial server 4 configured to receive money prepaid in cash processed by the integrated financial product-providing server 10 and perform a loan operation to the payment recipient, or
a credit card company server configured to process money prepaid by the credit card and performing a loan operation to the payment recipient, the financial server or the credit card company server being linked with the integrated financial product-providing server 10.

23. The system for providing a financial product with a variable expenditure-linked interest rate of claim 20, wherein in the user terminal 2, a financial product-linked application 8 accessing the integrated financial product-providing server 10, displaying an UI, inputting product selection information, reading interest information, performing an account transfer, outputting information of a balance after actual product purchase is installed.

24. The system for providing a financial product with a variable expenditure-linked interest rate of claim 20, wherein the integrated financial product-providing server 10 calculates and provides a certain rate of expenditure-linked interest for a changed balance after actual purchase of a product is made.

25. The system for providing a financial product with a variable expenditure-linked interest rate of claim 20, wherein the integrated financial product-providing server 10 includes an interest rate manager 62 calculating a cumulative cash interest per day when a certain period elapses after prepayment by the user in cash for future expenditure, providing a prepurchase support interest for money spent when actual expenditure occurs, and performing interest management to provide a prepayment interest for a balance after adjustment.

26. The system for providing a financial product with a variable expenditure-linked interest rate of claim 20, wherein if the user specifies a plurality of payment recipients, the integrated financial product-providing server 10 divides a payment amount of the user at a ratio of sales and prepays the divided amount.

27. The system for providing a financial product with a variable expenditure-linked interest rate of claim 20, wherein if the user specifies a plurality of payment recipients, the integrated financial product-providing server 10 divides a payment amount of the user at a ratio of sales and prepays the divided amount, and manages so that a total amount of payment for each company does not exceed an amount requested by each company.

28. The system for providing a financial product with a variable expenditure-linked interest rate of claim 20, wherein if the user specifies a plurality of payment recipients, the integrated financial product-providing server 10 divides a payment amount of the user by reflecting a credit rating of each payment recipient so that the higher the credit rating, the larger the prepaid amount is, and prepays the divided amount.

29. The system for providing a financial product with a variable expenditure-linked interest rate of claim 20, wherein the integrated financial product-providing server 10 includes a membership information manager 52 registering and managing information of a user who enrolls in the financial product with a variable expenditure-linked interest rate and a producer or seller for receiving support money of the financial product with a variable expenditure-linked interest rate;
a financial product selection unit 54 providing the financial product with a variable expenditure-linked interest rate so that the user selects;
a future expenditure company setting unit 56 registering information of a future expenditure company set by the user; and
a payment information manager 58 managing information of prepayment by the user to the future expenditure company.

30. The system for providing a financial product with a variable expenditure-linked interest rate of claim 20, wherein the integrated financial product-providing server 10 further includes a company-receiving amount calculator 60 dividing prepaid money of the user for companies specified by the user at a certain ratio to calculate an amount paid to each company.

31. The system for providing a financial product with a variable expenditure-linked interest rate of claim 20, wherein the integrated financial product-providing server 10 includes a prepayment processor 64 processing prepayment according to a pre-registered condition at the time of prepayment by the user.

32. The system for providing a financial product with a variable expenditure-linked interest rate of claim 20, wherein the integrated financial product-providing server 10 performs fee processing by being linked with a card company server so that a card fee of the company for money spent when actual expenditure occurs is incurred at the time of prepayment by the user for future expenditure by a credit card.

33. The system for providing a financial product with a variable expenditure-linked interest rate of claim 21, wherein the prepurchase support interest is an interest provided to the user to be usable at the time of actual purchase of a product or service.

34. The system for providing a financial product with a variable expenditure-linked interest rate of claim 21, wherein the prepayment interest is an interest provided to the user according to a period of use of a payment from a point in time at which payment to the company is made to a point in time at which actual purchase of a product or service is made.

35. The system for providing a financial product with a variable expenditure-linked interest rate of claim 34, wherein the longer the period from the point in time at which payment to the company is made to the point in time at which actual purchase of a product or service is made, the larger the prepayment interest provided to the user is.
